# EUROPEAN PATENT SPECIFICATION

(11) **EP 0 823 624 B1**
(45) Date of publication and mention of the grant of the patent: **17.12.2003**
(21) Application number: 97306074.2
(22) Date of filing: 08.08.1997
(51) Int. Cl.: G01M 17/02

(54) **An apparatus for measuring and correcting uniformity of tyres**
Ein Apparat zur Messung und Korrektur der Reifenuniformität
Un appareil pour mesurer et corriger l'uniformité des roues

(30) Priority: 09.08.1996 JP 21117396; 09.08.1996 JP 21117496; 25.12.1996 JP 34535396; 20.06.1997 JP 16434497
(43) Date of publication of application: 11.02.1998
(73) Proprietor: Bridgestone Corporation, Tokyo (JP)
(72) Inventor: Kokubu, Takao, Akishima-shi, Tokyo (JP); Goto, Takahiro, Kodaira-shi, Tokyo (JP); Kinoshita, Kazuhide, Kodaira-shi, Tokyo (JP); Nakashima, Katsutoshi, Hachioji-shi, Tokyo (JP); Oku, Masaharu, Kodaira-shi, Tokyo (JP)
(74) Representative: Lee, Nicholas John

(56) References cited:
- EP-A- 0 130 759
- EP-A- 0 421 827
- EP-A- 0 522 667
- DE-A- 4 003 980
- US-A- 3 848 368
- US-A- 4 792 049
- PATENT ABSTRACTS OF JAPAN vol. 008, no. 180 (M-318), 18 August 1984 & JP 59 070546 A (KOBE SEIKOSHO KK), 21 April 1984
- PATENT ABSTRACTS OF JAPAN vol. 017, no. 609 (P-1640), 9 November 1993 & JP 05 187952 A (BRIDGESTONE CORP), 27 July 1993
- PATENT ABSTRACTS OF JAPAN vol. 012, no. 081 (M-676), 15 March 1988 & JP 62 222902 A (YOKOHAMA RUBBER CO LTD:THE), 30 September 1987

## Description

The present invention relates to an apparatus and method for measuring and correcting the uniformity of tyres.

In a known apparatus for measuring and correcting the uniformity of tyres, a rotary drum (used as a substitute for a flat road surface) is pressed against a tyre attached to a rotary shaft and three components of a force occurring are measured as the tyre rotates. Uniformity correction is carried out by scraping a required portion of the tyre with a grinder mechanism on the basis of the result of the uniformity measurement.

The uniformity correction is carried out while the rotary drum is pressed against the tyre so that a subsequent uniformity measurement can be carried out and further uniformity correction can be made, if necessary.

Hitherto, one rotary drum and one grinder mechanism have been provided in combination for one transfer line (Japanese Patent Publication Sho 53-14598).

A sensing device for calculating tyre uniformity incorporating one rotary drum and one grinder in combination with a single conveyor belt delivery has been disclosed in US 3,848,368.

There is an example in which one rotary drum is used for two transfer lines. However, at the tyre uniformity correction stage, control of uniformity measurement and correction is the same as the case where there is one rotary drum for one transfer line.

Thus, if uniformity correction is carried out for a tyre on one transfer line, the rotary drum is kept pressed against the tyre until a final satisfactory uniformity measurement is made after the necessary corrections and measurements have been carried out.

Accordingly, the other transfer line becomes stagnant because no uniformity measurement can be carried out on this line, and therefore the working efficiency is very low.

To cope with this, respective rotary drums may be provided on each of the two transfer lines so that uniformity measurements for the two transfer lines are carried out independently. However, the installation costs increase because two rotary drums are required.

The aforementioned rotary shaft to which a tyre is attached is provided at a halfway position of the transfer line to support the tyre by upper and lower rims. The rotary drum is positioned laterally of the rotary shaft.

The size of the upper and lower rims for supporting the tyre on the rotary shaft varies according to type of tyre. Therefore, the rims must be exchanged as the occasion demands. A method for supplying the rims is proposed by Japanese Laid-Open Patent Publication No. Hei 6-254989. According to this method, a plurality of mount conveyors, which are movable up and down are positioned alongside a transfer conveyor. A pair of upper and lower rims is placed on each of the mount conveyors.

The required upper and lower rims can be easily shifted onto the transfer conveyor by setting a mount conveyor at the same height as the transfer conveyor. Thus, a pair of upper and lower rims of the required size can be selectively supplied.

However, in the above-mentioned document, there is no description of the recovery of the rims after use, and it follows that the recovery is carried out by hand. Namely, detaching the upper and lower rims from the rotary shaft and carrying them to a predetermined place or to one of the mount conveyors for storage is performed by workers. This requires a large labour force.

Furthermore, since a rim supply apparatus is required for each tyre uniformity machine, installation costs are increased.

Tyres measured by a tyre uniformity measurement apparatus are classified, based on the result of the measurement, to be used for various purposes. In a conventional tyre transport and classification apparatus, after uniformity measurement, tyres are transported forward (downstream) by a forward transport conveyor and transferred onto a right-and-left (sideways) transport conveyor which is at the end of the forward transport conveyor and runs at right angles to the forward transport conveyor. The tyres are then transported by the right-and-left transport conveyor to a predetermined position corresponding to the kind of tyre.

The number of kinds of tyre into which the tyres can be classified is generally determined by how many tyres can be arranged on the right-and-left transport conveyor whilst leaving a proper space between them. For example, if three tyres can be arranged on the right-and-left transport conveyor with a proper space between them, three kinds of tyre can be classified. Hitherto, such classification of about three kinds of tyres was common in view of installation space available.

Tyre measurement standards and tyre performance judgment criteria set in a tyre uniformity measurement apparatus have been dispersed widely according to tyre size (rim diameter, tyre width, flatness etc.), use and destination. The number of kinds of tyre tends to increase more and more in the future.

The classification of about three kinds of tyre in the customary transport classification apparatus cannot cope with the above situation. If the right-and-left transport conveyor is made longer, the number of kinds of tyre into which the tyres can be classified is increased, but more space is required for installing the apparatus so that space efficiency becomes low. In almost all lines of existing uniformity measurement apparatuses, there is no space for this increase in length and therefore the increase is very difficult.

According to the present invention, there is provided an apparatus for measuring and correcting the uniformity of tyres, comprising: a transfer conveyor to transfer tyres, said transfer conveyor being provided with a support means for supporting and rotating a tyre conveyed to the support means by the transfer conveyor; a rotary drum for measuring the uniformity of a tyre supported by said support means, said drum being positioned to be pressed against and rotating with a tyre which is supported by the support means; and grinder mechanisms, associated with said transfer conveyor, for grinding a tyre supported by the support means to correct the uniformity of the tyre when correction uniformity is required; characterised in that the apparatus comprises: first and second such transfer conveyors for transferring tires, arranged substantially parallel to one another and each having support means for supporting and rotating a tyre conveyed to the support means by the respective transfer conveyor; a single said rotary drum disposed between said first and second parallel transfer conveyors to be pressed against and rotating with tyres which are supported by respective support means to measure the uniformity of the tyres, said rotary drum being provided to move reciprocally at substantially regular intervals between said first and second parallel transfer conveyors while being pressed alternately against the tyres on the support means of the first and second transfer conveyors regardless of whether uniformity correction is required or not, to carry out uniformity measurements alternately on tyres supported by the respective support means; and first and second grinder mechanisms provided for grinding tyres on respective support means of the first and second transfer conveyors.

Preferably, the apparatus also comprises a control means, wherein the control means a control means for controlling uniformity measurement by the rotary drum and uniformity correction by the grinder mechanisms, so that, as the uniformity correction of a tyre supported by the support means of one of the first and second transport conveyors is carried out, the uniformity measurement of a tyre supported by the support means of the other of the first and second transport conveyors is carried out.

Preferably, each of the support means comprises rim shafts which support the tyre by means of upper and lower rims.

Because the uniformity correction of a tyre supported by one of the support means is carried out at the same time as the uniformity measurement of a tyre supported by the other support means, even if only one rotary drum is provided, the problem of uniformity measurement on one of the transfer conveyors stagnating is overcome. Thus, uniformity measurement and correction can be carried out efficiently.

In one embodiment, the control means controls the rotary drum to move between the first and second transfer conveyors at regular intervals, so that uniformity measurements are carried out alternately on tyres supported by the support means of the first and second transfer conveyors, regardless of whether uniformity correction is necessary or not.

In this embodiment, even if a uniformity correction is required on one of the transfer conveyors, uniformity measurements on the other transfer conveyor are carried out at an ordinary pace without a loss of time. The results of the uniformity correction can be measured when the rotary drum returns to the transfer conveyor on which the uniformity correction was carried out.

The apparatus of the present invention may further comprise a rim exchange apparatus, which comprises:
a rim storage shelf arranged upstream of and alongside a transfer conveyor, the rim storage shelf being movable up and down and having shelves for storing respective pairs of upper and lower rims;
upstream shifting means for shifting a pair of upper and lower rims from the rim storage shelf to the transfer conveyor;
a table lifter arranged downstream of and alongside the transfer conveyor;
downstream shifting means for shifting a pair of upper and lower rims from the transfer conveyor to the table lifter; and
a rim transport means for transporting rims between the table lifter and the rim storage shelf.

In use, the rim storage shelf ascends and descends so that a shelf thereof is at the same height as the transfer conveyor. The shelf carries a pair of upper and lower rims, for example of a different size to those currently used by the apparatus. The rims are shifted from the shelf onto the transfer conveyor by the upstream shifting means and are transported to be used by the support means. In the meantime, the pair of upper and lower rims detached from the rotary shaft of the support means is transferred by the transfer conveyor adjacent to the table lifter, and is shifted onto the table lifter by the downstream shifting means. The table lifter is lowered, and the pair of upper and lower rims is transported by the transport means to the rim storage shelf and placed on a predetermined shelf thereof which is at the same height as the transport means. Thus, the supply of the upper and lower rims to the tyre uniformity and correction apparatus and recovery of the used rims to the original supply place can be fully automated.

The apparatus of the present invention may further comprise a tyre transport and classification apparatus, which comprises:
first and second forward transport conveyors, arranged downstream of, and as extensions of, the first and second transfer conveyors, for transporting tyres downstream after uniformity measurement;
at least one intermediate forward transport conveyor, arranged between the first and second forward transport conveyors, for transporting tyres downstream; and
a first sideways transport conveyor, arranged substantially at right angles to the forward transport conveyors, for transporting tyres in a direction substantially at right angles to the downstream direction.

In addition to classifications by each of the forward transport conveyors, the first sideways transport conveyor allows two further classifications, making a total of five classifications when there is one intermediate conveyor.

Preferably, the tyre transport and classification apparatus further comprises forward and rearward distribution means arranged at each end of the first sideways transport conveyor for distributing tyres selectively in the downstream or upstream direction.

The forward and rearward distribution means allow two further classifications by directing tyres from each end of the first sideways transport conveyor either in the upstream or the downstream direction. Thus, the number of kinds of tyre into which the tires can be classified can be greatly increased without a large increase in the installation space of the apparatus.

The present invention also provides an apparatus for measuring and correcting uniformity of tyres, comprising right and left transfer conveyors arranged in two parallel files for transferring tyres; rim shafts provided at each corresponding middle position of the right and left transfer conveyors for supporting and rotating the tyre by upper and lower rims; a rotary drum arranged between the right and left rim shafts capable of moving in a right and left direction to be pressed against the tyre supported by one of the rim shafts for detecting load condition while rotating together with the tyre; grinder mechanism provided on each of the right and left transfer conveyors at a position opposite to the rotary drum with respect to the transfer conveyor; and control means for controlling uniformity measurement by the rotary drum and uniformity correction by the grinder mechanism so that when the uniformity correction of a tyre supported by one of the rim shafts is carried out, the uniformity measurement of another tyre supported by another rim shaft is carried out.

The invention also provides an apparatus for measuring and correcting the uniformity of tyres, comprising:
a transfer conveyor for transferring tyres and having support means for supporting and rotating a tyre conveyed to the support means by the transfer conveyor;
a rotary drum for measuring the uniformity of a tyre supported by the support means by being pressed against and rotating with the tyre;
a grinder mechanism associated with the transfer conveyor, for grinding a tyre supported by the support means to correct the uniformity of the tyre; and
a rim exchange apparatus, which comprises (a) a rim storage shelf arranged upstream of and alongside the transfer conveyor, the rim storage shelf being movable up and down and having shelves for storing respective pairs of upper and lower rims, (b) upstream shifting means for shifting a pair of upper and lower rims from the rim storage shelf to the transfer conveyor, (c) a table lifter arranged downstream of and alongside the transfer conveyor, (d) a downstream shifting means for shifting a pair of upper and lower rims from the transfer conveyor to the table lifter, and (e) a rim transport means for transporting rims between the table lifter and the rim storage shelf.

For a better understanding of the invention, and to show how the same may be carried into effect, reference will now be made, by way of example, to the accompanying drawings, in which:-
Fig. 1 is a partial plan view of one embodiment of a tyre uniformity measurement and correction apparatus according to the present invention;
Fig. 2 is a side view of the apparatus of Fig. 1;
Fig. 3 is a front view of the measurement block of the apparatus of Fig. 1, viewed from the downstream side;
Fig. 4 is a partial perspective view of the measurement block of Fig. 3;
Fig. 5 is a side view showing a grinder mechanism of the apparatus of Fig. 1;
Fig. 6 is a plan view of the grinder mechanism of Fig. 5;
Fig. 7 is a partial perspective view of one rim exchange apparatus of the apparatus of Fig. 1;
Fig. 8 is a timing chart of tyre uniformity measurements and corrections;
Fig. 9 is a sectional view of an alternative rim exchange apparatus of the apparatus of Fig. 1;
Fig. 10 is a sectional view of the rim exchange apparatus of Fig. 9 showing another state thereof;
Fig. 11 is a plan view of a rim shifting plate of the rim exchange apparatus of Fig. 9;
Fig. 12 is a front view similar to Fig. 3, showing an alternative tyre rotating mechanism;

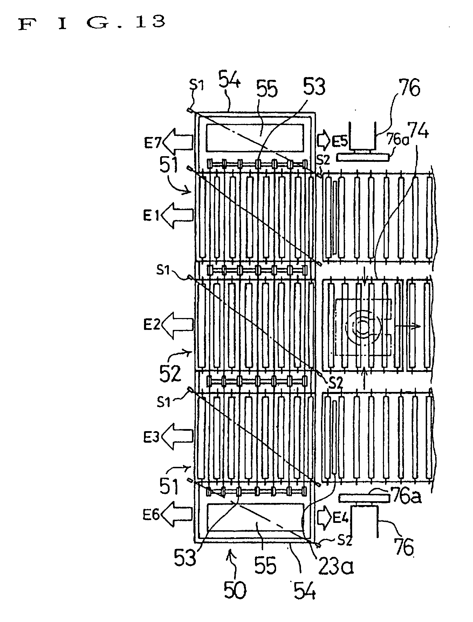

Fig. 13 a plan view of one tyre transport and classification apparatus of the apparatus of Fig. 1;
Fig. 14 is a detailed side view of the apparatus of Fig. 13;
Fig. 15 is a plan view of an alternative tyre transport and classification apparatus of the apparatus of Fig. 1; and
Fig. 16 is a side view of the apparatus of Fig. 15.

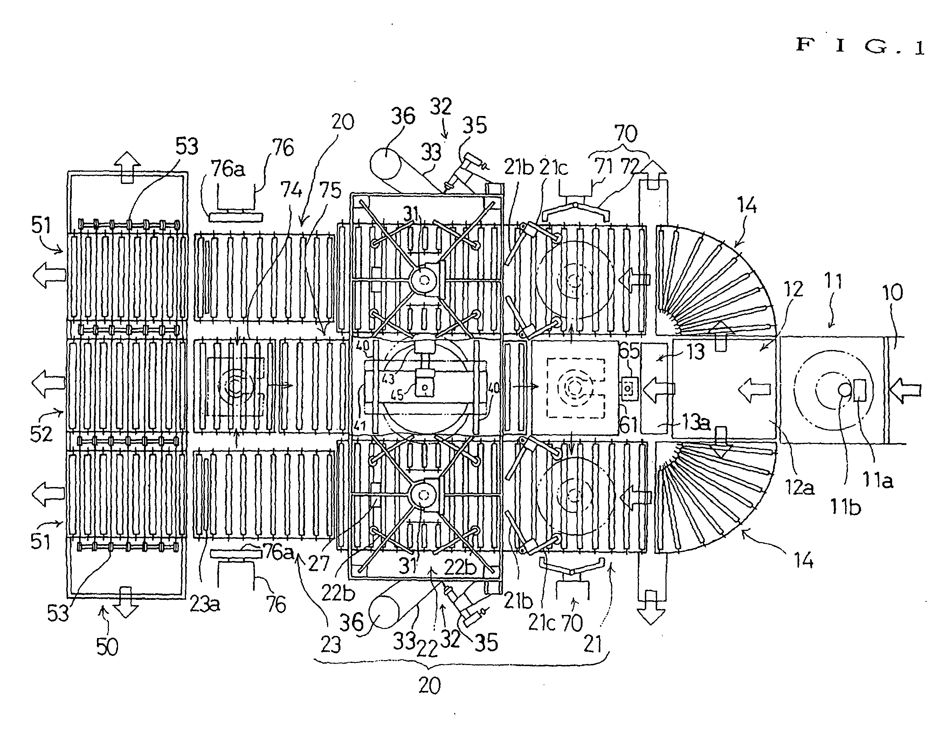

A preferred embodiment of the present invention is shown in Figs. 1 to 8.

In a tyre uniformity measurement and correction apparatus 1, tyres 2 to be measured are brought, one by one, into a tyre discrimination apparatus 11 from a stock conveyor 10 upstream of the tyre discrimination apparatus.

In the tyre discrimination apparatus 11, the tyre 2 is rotated about a vertical axis while a bar code discrimination paper affixed to a side wall of the tyre is read by a bar code reader 11a to input information about the tyre.

At the same time, diluted silicone is applied to the bead section of the tyre by a lubricant applicator 11b to ensure that the tyre and a rim of the apparatus fit smoothly.

Downstream of the tyre discrimination apparatus 11 is arranged a distribution apparatus 12 which has a slanting plate 12a capable of slanting forward (downstream), rightward and leftward (as viewed from upstream of the apparatus) so that a tyre 2 placed on the slanting plate 12a can be distributed in any of these three directions.

When two kinds of tyre are to be measured, the tyres are distributed to the right or left side based on the tyre information input at the tyre discrimination apparatus 11. When the bar code cannot be read or a not scheduled tyre is brought in, that tyre is distributed forward.

When only the one kind of tyre is to be measured, the tyres are distributed right and left alternately. However, a tyre having a bar code which cannot be read or a not scheduled tyre is distributed forward.

The tyres distributed forward fall onto a slanting plate 13a through an opening 13. The slanting plate 13a slants rightward or leftward so that a tyre having a bar code which cannot be read rolls out to one side and a not scheduled tyre rolls out to the other side.

The tyres distributed rightward and leftward from the distribution apparatus 12 are transferred by means of roller conveyors 14, 14 to right and left transfer conveyors 20, 20 respectively, which conveyors are arranged parallel to one another. The roller conveyors 14, 14 are curved so as to change the advancing direction at a right angle.

The right and left transfer conveyors 20, 20 are constructed symmetrically with a predetermined long space therebetween. Part of a rim exchange apparatus 8 is arranged in the long space.

Because the right and left transfer conveyors 20, 20 are symmetrical, only one of them will be described hereinafter.

The transfer conveyor 20 has a centring block 21, a measurement block 22 and a transport block 23, each of which is constituted by roller conveyors.

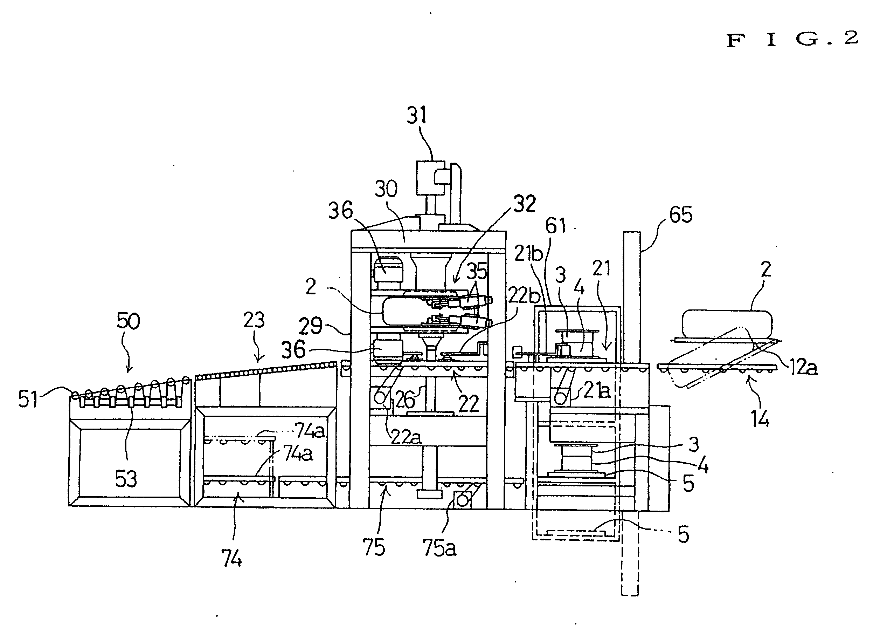

As shown in Figs. 1 and 2, the centring block 21 has a plurality of transfer rollers which are turned by a motor 21a at the same speed. Also provided are a pair of right and left stoppers 21b, 21b and a pair of swingable centring arms 21c, 21c. A tyre 2 brought onto the centring block 21 is stopped by the stoppers 21b, 21b and centred by the centring arms 21c, 21c which hold the tyre from the right and the left, and position it so that it advances thereafter in a predetermined central position.

The measurement block 22 has a plurality of rollers turned by a motor 22a at the same speed. These rollers can also be turned in a reverse direction so that a tyre can be conveyed in the upstream direction.

On the measurement block 22 are arranged respective pairs of swingable right and left positioning arms 22b, 22b by means of which the tyre is positioned so that the centre axis of the tyre 2 aligns with upper and lower rim shafts 25, 26.

Certain rollers of the measurement block 22 are divided into right and left short rollers as to form an opening opposite to a central part of the tyre 2 supported on the measurement block 22.

Positioned above the opening is an upper rim shaft 25 with an upper rim 3 detachably attached to the lower end thereof. A lower rim 4 is detachably attached to the upper end of a lower rim shaft 26 positioned under the opening.

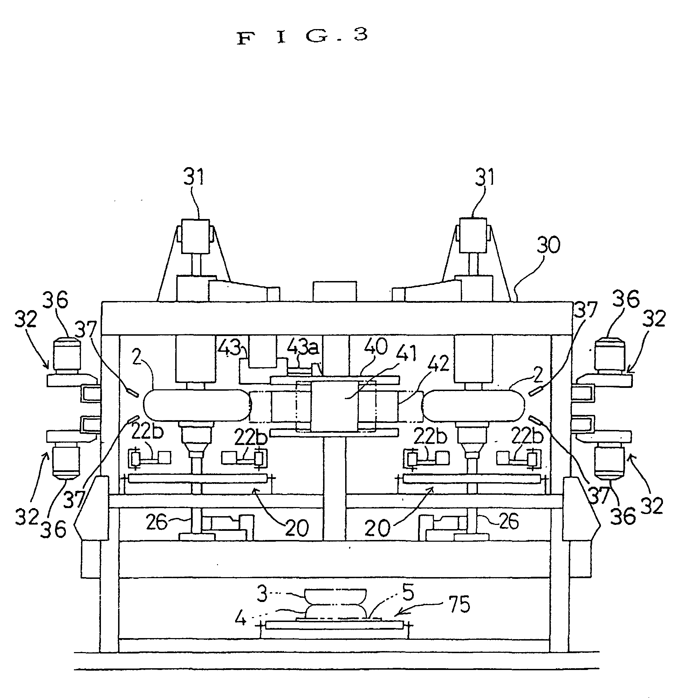

The lower rim shaft 26 is movable up and down so that the lower rim 4 attached to the upper end thereof can pass through the opening. On the other hand, the upper rim shaft 25 is rotatably supported on a supporting frame 30 constructed over the right and left measurement blocks 22, 22. The driving shaft of a servomotor 31 is connected (Figs. 2 and 3) to the upper protruding portion of the shaft 25. The servomotor 31 is fixedly supported by means of a bracket on the supporting frame 30 spanned between struts 29.

Under a central part of the supporting frame 30 is arranged a rectangular frame body 41 which can slide right and left guided by two pairs of upper and lower rails 40 provided at the front and rear positions, respectively. On the rectangular frame body 41 is pivoted a rotary drum 42 by a vertical supporting shaft 42a.

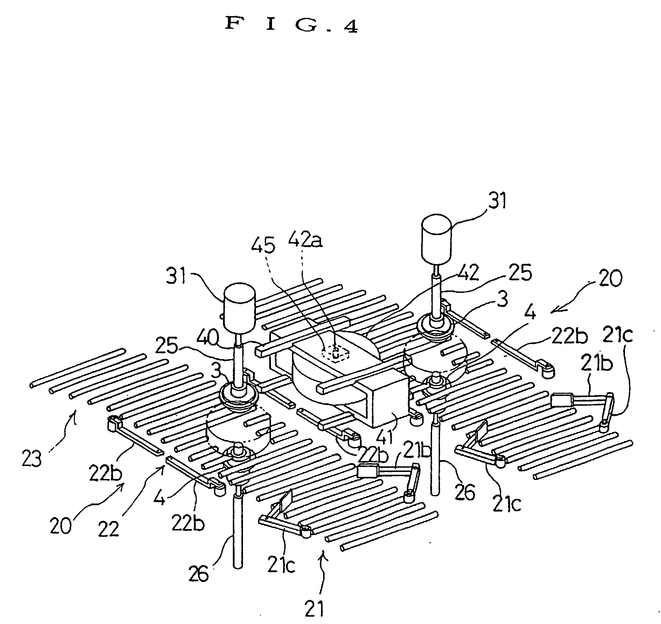

As shown in Fig. 4, the rectangular frame body 41 has upper, lower, front and rear walls which form a rectangular shape with openings on the right and left sides. The supporting shaft 42a is supported by the upper and lower walls, and the rotary drum 42 is rotatably supported between the upper and lower walls and partly protrudes out of the right and left openings.

Laterally of the upper wall of the rectangular frame body 41 is provided a hydraulic cylinder 43 which is hung from the supporting frame 30 (Fig. 3). The end of a piston rod 43a of the hydraulic cylinder 43 is fixed to a wall of the rectangular frame body 41 so that the rectangular frame body 41 and the rotary drum 42 slide right and left in accordance with expansion and contraction of the piston rod 43a.

The upper and lower walls of the rectangular frame body 41 are supported by the front and rear walls thereof and have sufficient rigidity and strength for rotatably supporting the rotary drum 42.

A load cell 45 is provided at a bearing part of the shaft 42a for detecting the magnitude of variation of a force in the radial direction of the tyre (radial force variation; RFV) and the magnitude of variation of a force in the lateral (axial) direction of the tyre (lateral force variation; LFV).

A marking apparatus 27 is arranged at a predetermined position above the roller conveyor of the measurement block 22. In addition, on either side of the measurement block 22 opposite to the rotary drum 42 with respect to the roller conveyor is provided a pair of upper and lower grinder mechanisms 32 symmetrically.

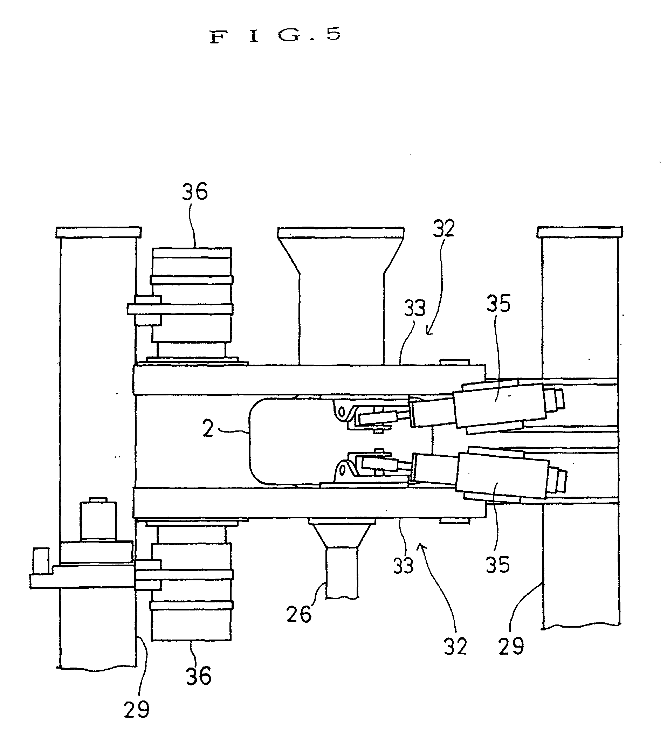

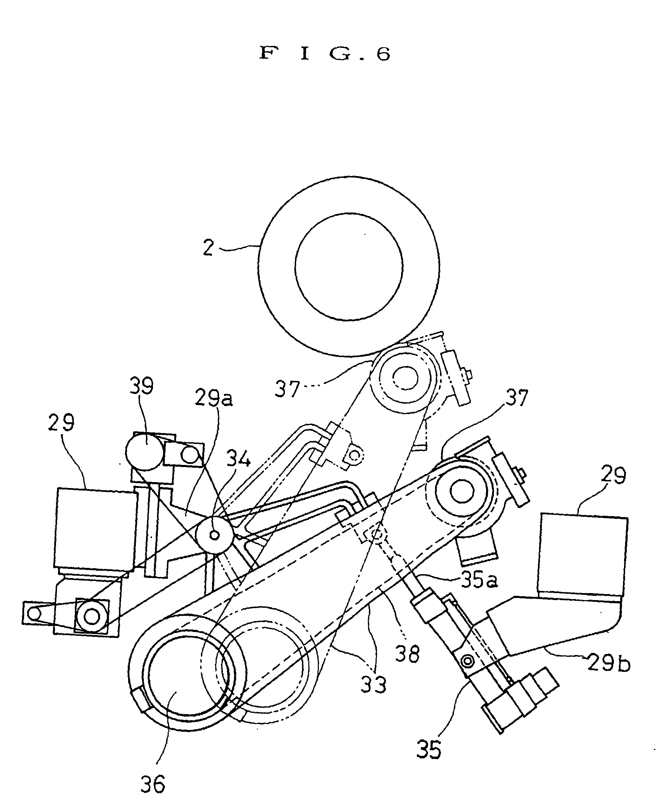

The upper grinder mechanism 32 will be described with reference to Figs. 5 and 6. A swinging member 33 is supported by a bracket 29a projecting from a strut 29 at the downstream side so as to swing horizontally about a supporting shaft 34. A servo-cylinder 35 is pivotally attached to a bracket 29b projecting from a strut 29 on the upstream side. The end of a piston rod 35a of the cylinder 35 is rotatably attached to the swinging member 33 so that the swinging member 33 is swung by driving of the servo-cylinder 35.

The swinging member 33 has a motor 36 provided on a base end side thereof and a grinder 37 rotatably attached on a tip end side thereof. A chain 38 is wound round a sprocket fitted to the drive shaft of the motor 36 and a sprocket integral with the grinder 37, so that the grinder 37 is driven by the motor 36.

In addition, the swinging member 33 is driven by a motor 39 so as to be movable up and down for adjusting the vertical position of the grinder 37.

Therefore, the grinder 37 can be set at the required height with respect to a tyre 2 which is rotated while being supported by the upper and lower rims 3, 4. Then, the rotating grinder 37 can be brought into contact with a required part of the tyre 2 by swinging the swinging member 33 by means of the servo-cylinder 35 so that the part of the tyre can be cut for uniformity correction.

The upper grinder mechanism 32 carries out uniformity correction on the upper half of the tyre 2 and the lower grinding mechanism 32 carries out uniformity correction on the lower half of the tyre 2.

A pair of upper and lower grinder mechanisms 32 is provided on each of the right and left transfer lines.

The transport block 23 provided downstream of the measurement block 22 is an inclined roller conveyor on which the tyre 2 is conveyed by its own weight. A stopper 23a capable of appearing above and disappearing below the roller conveyor is provided at a predetermined position near the downstream end thereof.

At the downstream side of the transfer conveyor 20 is arranged a distribution conveyor 50 which extends perpendicular to and is connected with both the right and left transfer conveyors 20, 20. The distribution conveyor 50 comprises first and second roller conveyors 51, 51 which form extensions of the right and left transfer conveyors 20, 20, and a third roller conveyor 52 between the first and second roller conveyors 51, 51. These three conveyors 51, 51, 52 are inclined for conveying a tyre 2 towards the downstream side thereof by its own weight.

A rope conveyor 53 is constituted by a plurality of ropes extending in the right and left directions between rollers of the roller conveyors 51, 52, 51. The ropes are movable above and below the three roller conveyors 51, 51, 52.

If the rope conveyor 53 is below the roller conveyor (lowered state), a tyre 2 conveyed onto the roller conveyor 51 from the transfer conveyor 20 advances on the roller conveyor 51. However, if the rope conveyor 51 rises above the roller conveyor, the tyre 2 is supported by the rope conveyor and therefore can be moved right and left by rotation of the rope conveyor 53. After the tyre has been moved by the rope conveyor onto any one of the roller conveyors, the rope conveyor 53 is lowered so that the tyre can be taken out by the appropriate roller conveyor.

In addition, by moving the tyre 2 on the rope conveyor 53 towards the right or left beyond the end of the rope conveyor, the tyre can be taken out on the right or left of the distribution conveyor 50.

Therefore, at the distribution conveyor 50, the tyre 2 can be distributed to and taken out of any one of five places, as shown in Fig. 1 by arrows. Thus, as well as transporting tyres, the distribution conveyor 50 constitutes a tyre transport and classification apparatus for classifying tyres according to their kind.

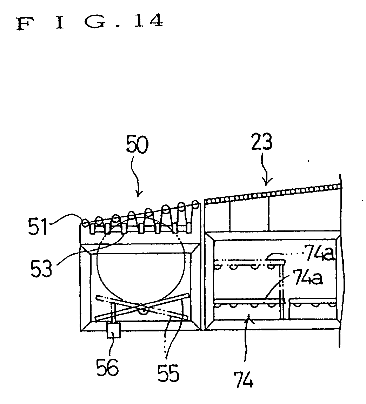

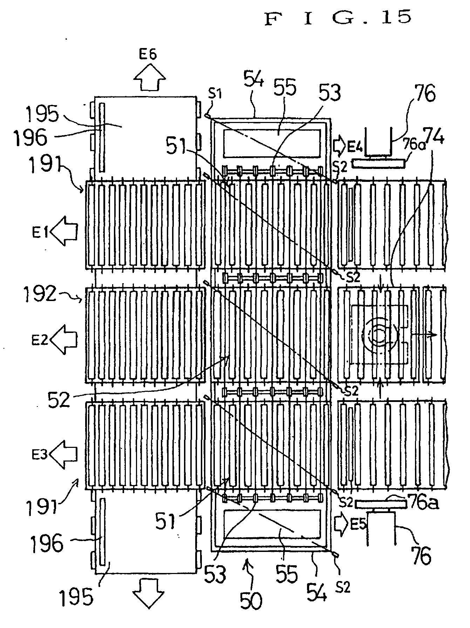

Referring to Figs. 14 and 15, which respectively are a plan view and a side view showing the distribution conveyor 50 in more detail, each roller conveyor 51, 52, 51 has a light sensor comprising a light projector S1 and a light receiver S2 for confirming the position of the tyre 2. When the light sensor confirms that the tyre 2 has been moved by the rope conveyor 53 to a required position, the rope conveyor 53 is lowered. The tyre 2 is shifted onto any one of the first, second and third roller conveyors 52, 51 and taken out by that roller conveyor. Thus, the tyres can be classified into three kinds to be taken out through the different outlets E1, E2, E3 respectively.

A limit switch can be used in place of the light sensor to confirm the position of the tyre 2. For example, a moving part of the limit switch may be formed by a swinging bar which comes into contact with a tyre being transported. The bar can swing to such an extent that the transportation of the tyre is not prevented, and turns on the switch to detect the tyre reaching a predetermined position.

Along the right and left take-out ends of the rope conveyor 53 are provided tyre chutes 54. Each tyre chute 54 has a square pipe shape with a flat rectangular opening (when viewed from above) so that the tyre 2 drops into the chute in an upright position. A tyre 2 transported in any direction on the rope conveyor enters a tyre chute 54 from the take-out end of the conveyor in an upright position and drops in that position.

At the bottom of the tyre chute 54 is provided a slanting plate 55 the middle of which is pivotally supported by a horizontal shaft directed in the right and left directions. The slanting plate 55 is driven by an air cylinder 56 so as to slant forwards or rearwards, that is, towards the downstream side or the upstream side. If the slanting plate 55 is slanted rearward, the tyre 2 rolls rearward to be taken out through the outlet E4 (E5) and, if slanted forward, the tyre rolls forward to be taken out through the outlet E6 (E7). The tyre chutes 54, 54 are also each provided with a light sensor comprising a light projector S1 and a light receiver S2 so that the passing of a tyre 2 can be confirmed.

According to the tyre transport and classification apparatus, the tyre can be classified into seven kinds by the outlets E1, E2, E3 and further by the outlets E4, E5, E6, E7. The installation space is widened only a little by the widths of the tyre chutes 54, 54. That is, the number of kinds of tyre into which the tyres can be classified can be increased up to twice or more without altering an existing layout, without requiring any new large equipment and at a low cost.

In the tyre uniformity measurement apparatus, it is necessary periodically to inspect a tyre to check the measurement accuracy. If the inspection tyre is taken out rearward through the outlets E4, E5, repetitive use of the inspection tyre is easy and labour can be reduced.

Further, if conveyors 20 are laid from the outlets E4, E5, parallel with the transfer conveyors 20, upstream to the tyre discrimination apparatus 11 or the distribution apparatus 12, both the carry-in and carry-out of the inspection tyre can be fully automated.

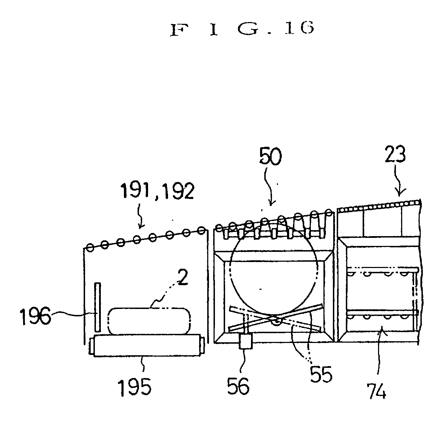

Figs. 15 and 16 show another embodiment of the tyre transport and classification apparatus. In this embodiment, a further classification means is added to the above-described tyre transport and classification apparatus. Figs. 15 and 16 show the downstream side of the transfer conveyor 20 including the transport blocks 23. The upstream side is the same as in the aforementioned embodiment.

Downstream of the roller conveyors 51, 52, 51 are roller conveyors 191, 192, 191 which are at the same inclination angle as that of the roller conveyors 51, 52, 51. The tyres 2 can be classified into three kinds and taken out through the outlets E1, E2, E3 respectively by using any one of the roller conveyors 51, 52, 51.

Under the roller conveyors 191, 192, 191 is laid a belt conveyor 195 which transports in the right and left directions. A tyre 2 rolled forward by the slanting plate 55 at the bottom of the tyre chute 54 moves on the belt conveyor 195. The tyre is stopped by a stopper, falls onto the belt conveyor 195 and is transported towards the right or left to be taken out through the outlet E6 or E7 respectively.

If the belt conveyor 195 is moving leftward when the tyre 2 rolls onto the conveyor 195, the tyre 2 is laid down on one side. Conversely, if the belt conveyor 195 is moving rightward, the tyre 2 is laid down on the other side. Therefore, it is possible to select whether the obverse side or the reverse side of the tyre faces upward. The obverse side is the side on which a serial number is indicated.

Thus, when the tyre 2 rolls onto the belt conveyor 195, the belt conveyor 195 can be moved rightward or leftward temporarily (regardless of the final transporting direction of the tyre by the belt conveyor 195) so as to lay down the tyre on the desired side, and then the belt conveyor 195 is driven in the final transporting direction.

In this manner, all of the tyres taken out through the outlets E6 and E7 can be further classified by whether the upper face thereof is the obverse side or the reverse side. Accordingly, tyres can be taken out from the belt conveyor 195 classified into four kinds.

The present transport and classification apparatus can classify tyres into nine kinds in all, five kinds from the outlets E1, E2, E3, E4, E5 and four kinds from the outlets E6 and E7.

Thus, by only adding the roller conveyors 191, 192, 191 and the belt conveyor 195 downstream of the roller conveyors 51, 52, 51, the number of kinds into which the tyre can be classified is increased without increasing the installation space very much.

If there is enough space, conveyors may be arranged under the take-out ends of the roller conveyors 191, 192, 191 respectively. These conveyors are for transporting the tyres forward, but can also lay down the tyres with either the obverse or reverse side facing upwards in a manner similar to the above-mentioned belt conveyor 195. Thus, the tyres can be further classified into two kinds at the three outlets respectively. Such conveyors may be provided under the roller conveyors 51, 52, 51 in place of the roller conveyors 191, 192, 191 and the belt conveyor 195, or applied to other places.

The tyre uniformity measurement and correction apparatus 1 having the construction described above is further provided with a rim exchange apparatus 60 for exchanging the rims 3, 4 automatically.

The space between the right and left transfer conveyors 20, 20 is utilized for the rim exchange apparatus 60 and a rim storage shelf 61 is arranged in the space between the centring blocks 21, 21.

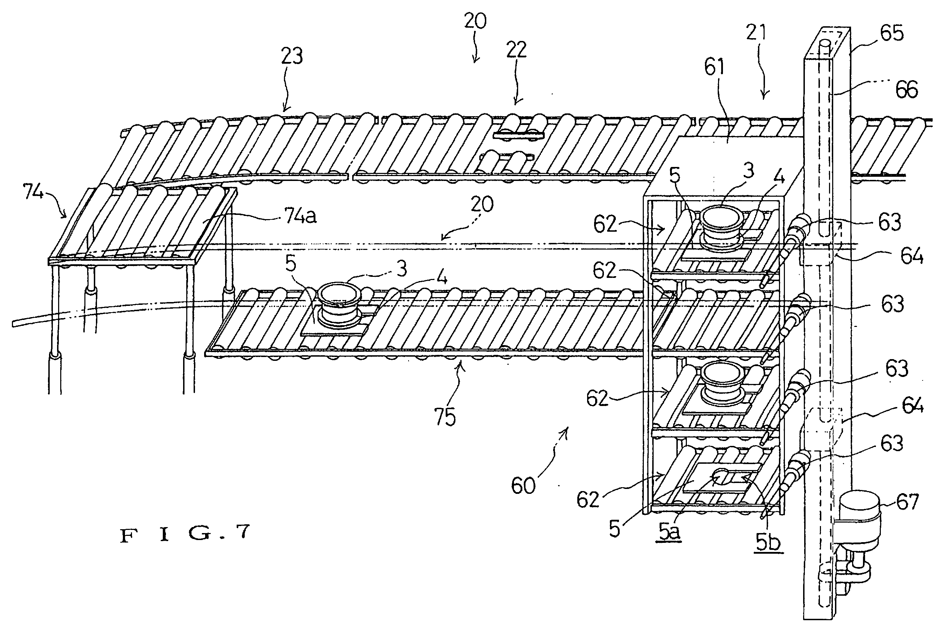

As shown in Fig. 7, the rim storage shelf 61 is a vertical box with openings on the front, right and left sides. Within the shelf box 61 are formed four mount conveyors 62 each having rollers turned by a motor 63 via a belt at the same speed.

Fixed on the back plate of the rim storage shelf 61 is a slider 64 which is slidably fitted to an upright supporting rail 65. Within the supporting rail 65, a screw shaft 66 extends vertically and passes through and engages with the slider 64.

The screw shaft 66 is rotated by a motor 67 fixed to a lower end of the supporting rail 65 via a timing belt 68, and the rim storage shelf 61 moves up and down in accordance with the rotation of the screw shaft 66 via the slider 64.

The upper and lower rims 3, 4 are conveyed and placed one above the other on a pallet 5 on a mount conveyor 62 of the rim storage shelf 61. As shown in Fig. 7, the pallet 5 has a rectangular plate shape and has a central circular hole 5a and a cut 5b extending to the circular hole 5a from a side of the pallet. The circular hole 5a has a diameter smaller than the outer diameter of the lower rim 4 but larger than the outer diameter of the lower rim shaft 26. An empty pallet 5 is also placed on a mount conveyor 62, as shown in Fig. 7.

Up and down motion of the rim storage shelf 61 can be controlled so that the mount conveyor 62 is set at the same height as the rollers of the centring block 21.

On an outer side of the centring block 21 is arranged a shifting apparatus 70 (Fig. 1) which comprises a cylinder 71 and a pinching arm 72 provided at the tip end of a piston rod of the cylinder 71.

In use, the piston rod of the shifting apparatus 70 protrudes from the cylinder 71 to approach the upper and lower rims 3, 4 placed on the mount conveyor 62 of the rim storage shelf box 61 which is positioned at the same height as the rollers of the centring block 21. The pinching arm 72 pinches the pallet S on which the rims 3, 4 are placed and then the piston rod is retracted to draw the pallet onto the rollers of the centring block 21.

A table lifter 74 having table 74a, movable up and down and formed by a roller conveyor, is arranged between the transport blocks 23, 23 of the right and left transfer conveyors 20, 20. The upper position of the table 74a is slightly lower than the rollers of the transport block 23.

Between the table lifter 74 and the rim storage shelf 61 is arranged a rim transport conveyor 75 comprising a roller conveyor. The conveyor 75 is arranged lower than the right and left transfer conveyors 20, 20 and has rollers turned by a motor 75a (Fig. 2) .

The lower position of the table 74a of the table lifter 74 is the same height as the rim transport conveyor 75.

On the outside of the transport block 23 of the transfer conveyor 20 is arranged a shifting cylinder 76, the piston rod of which is directed inward and has a pressing bar 76a formed at the end thereof.

A pallet 5 on the rollers of the transport block 23 (with or without the upper and lower rims 3, 4) is pressed by the pressing bar 76a to be shifted onto the table 74a of the table lifter when in the upper position thereof.

Hereinafter, the operation of the tyre uniformity measurement and correction apparatus 1 and the rim exchange apparatus 60 will be described.

At first, specific upper and lower rims 3, 4 are fitted to the upper and lower rim shafts 25, 26 of each of the right and left measurement blocks 22, 22. Other upper and lower rims 3, 4 of different sizes are stored on pallets 5 in the rim storage shelf 61. An empty pallet 5 is also stored in the shelf 61.

A tyre 2 brought in from the stock conveyor 10 is firstly discriminated by reading the bar code thereof and has diluted silicone applied to the bead section thereof at the tyre discrimination apparatus 11. It is then moved to the distribution apparatus 12 where tyres which cannot be discriminated or have a size deviating from a predetermined size fall forward to be ejected and other tyres are distributed rightward or leftward in accordance with the discriminated sizes.

When tyres of the same kind are to be measured for uniformity at the right and left measurement blocks, the tyres are distributed rightward and leftward alternately.

The tyre 2 changes its course by means of the curved roller conveyor 14 and comes to the centring block 21 of the transfer conveyor 20 where the tyre 2 is centred by the pair of right and left centring arms, and is then transferred to the measurement block 22 at a predetermined timing by the stopper 21b.

At the measurement block 22, the tyre 2 is positioned by the front, rear, right and left positioning arms 22a. The lower rim shaft 26 rises so as to support and raise the bead section of the tyre 2 by the lower rim 4 which is fitted to the upper end of the rim shaft 26. The upper rim 3 fitted to the upper rim shaft 25 receives the bead section of the tyre 2 and the upper and lower rims engage with each other. Thus, the tyre 2 is held at a predetermined height (the same height as the rotary drum 42). Air is then supplied to the tyre to maintain a predetermined inner pressure.

The rotary drum 42 is moved by the hydraulic cylinder 43 and is pressed against the tyre 2 at a predetermined pressure. The upper rim shaft 25 is rotated by the servomotor 31 to rotate the tyre 2, so that the rotary drum 42 rotates together with the tyre 2. After several rotations, uniformity measurements are carried out while the tyre is rotated in the reverse direction.

Uniformity measurement is carried out over the entire circumference of the tyre by the detection of the load cell 45. The result of this detection is processed by a computer to calculate uniformity measurement values and the tyre is assessed according to the uniformity measurement values, such as RFV and LFV.

When a uniformity measurement is being carried out on one measurement block 22, tyre attachment work on the upper and lower rims 3, 4 is being carried out on the other measurement block 22. Thus a good working efficiency is attainable.

When it is judged that a correction is necessary as a result of the uniformity measurement, uniformity correction by the grinder mechanism 32 is commenced, while the rotary drum 42 is moved to the other measurement block 22.

The procedure when uniformity correction is necessary will be described later. First, the procedure in the case that no uniformity correction is required will be described.

A mark is put on the point of the tyre where the maximum RFV value was measured in the uniformity measurement by the marking apparatus 27.

To enable the marking apparatus 27 to put the mark at the specified point, the servomotor 31 drives the tyre 2 so that the rotation of the tyre is stopped when the point of the tyre reaches a predetermined position (the most downstream point, for example).

When the measurement has finished, the rotary drum 42 returns to its former position, the inner pressure of the tyre 2 is reduced, the lower rim shaft 26 is lowered so that the tyre 2 rests on the rollers of the measurement block 22, and the tyre 2 is transferred to the transport block 23.

The tyre 2 advances on the rollers of the transport block 23 to the distribution conveyor 50 where it is distributed and discharged to any one of the five discharge places in accordance with the assessment of the tyre by the uniformity measurement.

The single rotary drum 42 is common to both the right and left measurement blocks 22, 22 of the two lines of transfer conveyors 20, 20. While measurement is carried out using the rotary drum 42 on one measurement block 22, the tyre 2 on the other measurement block 22 can be attached to or detached from the upper and lower rims 3, 4. Therefore, the uniformity measurement work can be carried out efficiently.

If the size of the upper and lower rims 3, 4 at the right measurement block 22 is different from that of the rims at the left measurement block 22, two kinds of tyres can be measured at the same time.

Rim exchange work is carried out as follows. First, an empty pallet 5 stored in the rim storage shelf 61 is transferred by the shifting apparatus 71 onto the rollers of the centring block 21 from a mount conveyor which has been positioned at the same height as the transfer conveyor 20. The empty pallet 5 is transferred to the measurement block 22 after centring.

On the measurement block 22, the pallet 5 is transported beyond the central part and is stopped there. The lower rim shaft 26 is raised so that the upper rim 3 engages the lower rim 4 and is detached from the upper rim shaft 25.

In the meantime, the rollers of the measurement block 22 are reversed to return the pallet 5 to the centre of the measurement block 22.

The pallet 5, which has the cut 5b at the upstream side thereof, is moved to a position where the lower rim shaft 25 passes through the central circular hole 5a and is stopped there. The lower rim shaft 26 is then lowered until the lower rim 4 is placed on the pallet 5, and the lower rim is then detached from the lower rim shaft 26.

The upper and lower rims 3, 4 thus placed on the pallet 5 are transferred to the transport block 23, and stopped at a predetermined position by the stopper 23a. The pallet 5 is pressed inwardly by the shifting cylinder 76 onto the table 74a of the table lifter 74, which is at the same height.

Next, the table 74a is lowered to the same height as the rim transport conveyor 75 and the pallet 5 is shifted onto the rim transport conveyor 75 and is transported to the rim storage shelf 61. An empty mount conveyor 62 is set at the same height as the rim transport conveyor 75 so that the pallet 5 can be stored on the mount conveyor 62.

At a timing somewhat delayed from the aforementioned removal and recovery of used upper and lower rims, supply and attachment of new upper and lower rims is carried out.

Thus, at a suitable time after the empty pallet S has been taken out from the rim storage shelf 61, new upper and lower rims 3, 4 on a pallet 5 stored in the rim storage shelf 61 are shifted to the transfer conveyor 20 by the shifting apparatus 70, and are transferred to the measurement block 22 after the used upper and lower rims have been removed.

On the measurement block 22, the new pallet 5 is positioned at the centre thereof and the lower rim shaft 26 is raised. The lower rim shaft 26 passes through the circular hole 5a of the pallet 5 to become engaged with the lower rim 4. The lower rim 4 (with the upper rim 3 thereon) rises so that the upper rim 3 comes into contact with the upper rim shaft 25 and is fitted thereto.

In the meantime, the pallet 5 left on the rollers is transferred to the transport block 23. Although the lower rim shaft 26 penetrates the circular hole 5a of the pallet 5, the lower rim shaft 26 can be disengaged from the pallet 5 by passing through the cut 5b when the pallet 5 moves downstream. Therefore, the pallet 5 can move downstream without any trouble.

After the pallet 5 has moved to the transport block 23, the lower rim shaft 26 is lowered. The upper rim 3 remains fitted to the upper rim shaft 25 and the lower rim 4, which is fitted to the lower rim shaft 26, is positioned under the rollers awaiting the next tyre.

The empty pallet 5 is shifted from the transport block 23 to the table 74a of the table lifter 74 by the shifting apparatus 76. Thereafter, the table 74a is lowered 22 and the pallet 5 is transferred to the rim transport conveyor 75. The pallet 5 is transported by the transport conveyor 75 and received on a mount conveyor 62 of the rim storage shelf 61.

Thus, it will be appreciated that removal and recovery of used upper and lower rims 3, 4 and supply and attachment of new upper and lower rims 3, 4 can be performed fully automatically, efficiently and smoothly.

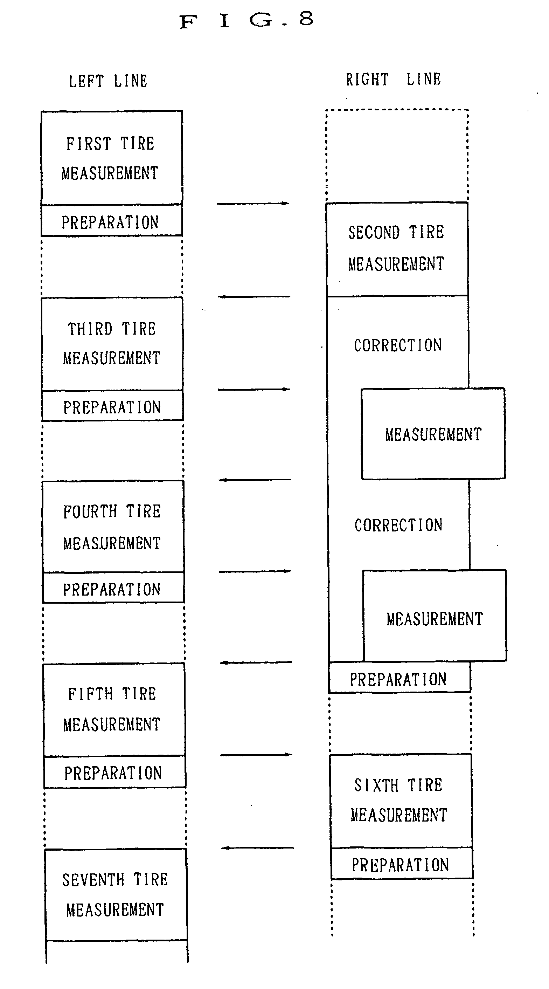

One example of the procedure when uniformity correction is necessary will now be described referring to the timing chart of Fig. 8.

A first tyre 2 is brought onto the measurement block 22 of the left transfer conveyor 20 and is held by the upper and lower rims 3, 4. The rotary drum 42 is moved to the left side and uniformity measurement is carried out on that tyre.

In the meantime, at the right measurement block 22, a second tyre 2 is set between the upper and lower rims 3, 4. The rotary drum 42 moves to the right side at a predetermined timing, irrespective of whether a correction is necessary for the first tyre 2.

The timing chart of Fig. 8 shows a situation when it is judged that correction of the first tyre 2 is unnecessary. At the right line, a uniformity measurement is carried out for the second tyre 2, and at the left line, preparation for measurement of the third tyre is commenced.

After measurement of the second tyre is finished, the rotary drum 42 moves to the left line at the predetermined timing and the uniformity measurement of the third tyre 2 is commenced.

If it is judged that a correction of the second tyre is necessary as a result of the measurement, the grinder 32 of the right side operates after the rotary drum 42 moves to the left side.

Namely, with regard to the second tyre 2, a spot to be cut is specified as a result of the uniformity measurement, and the grinder 37 is positioned in accordance with that spot, is applied to the tyre 2 and rotated by the servomotor 31 at a required speed to cut the tyre for uniformity correction.

As uniformity correction is carried out on the right line, uniformity measurement of the third tyre 2 is carried out by the rotary drum 42 at the left line.

After the uniformity measurement of the third tyre 2 has been completed, the rotary drum 42 moves to the right line at the predetermined timing and measurement of the second tyre 2 is carried out in order to confirm the effect of the uniformity correction.

After this measurement, the rotary drum 42 moves to the left line at the predetermined timing and carries out a uniformity measurement on a fourth tyre 2, while another uniformity correction based on the result of the second measurement of the second tyre 2 is carried out on the right line.

When it is judged that no correction of the second tyre 2 is required as the result of the second measurement, measurement of the second tyre 2 comes to an end, the tyre is disengaged from the upper and lower rims 3, 4 for transportation, and supply of the fifth tyre 2 is awaited.

In case of the timing chart of Fig. 8, while a measurement is carried out on the fourth tyre 2 on the left line, a second correction on the second tyre 2 is carried out. The rotary drum 42 reaches the right line after the measurement of the fourth tyre 2 and carries out a measurement for confirming the effect of the second correction, while a fifth tyre 2 is supplied to the left line.

Since the rotary drum 42 reciprocates between the right and left lines at a predetermined timing for carrying out uniformity measurements regardless of whether uniformity correction is necessary or not, even if a uniformity correction is required on one line, uniformity measurements on the other line are carried out without interruption. Therefore, the uniformity measuring and correcting works can be performed efficiently.

The result of the uniformity correction can be measured by the rotary drum 42 when it returns to the appropriate line. As described above, respective uniformity measurements on both right and left transfer conveyors 20 can be efficiently carried out by a single rotary drum 42 and installation costs can be reduced.

In the present embodiment, respective independent motors 31 are used for rotating the tyres 2 held by the upper and lower rims 3, 4 of the left and rights sides. However, a single motor may be used if two pulleys for driving the respective rim shafts by means of belts are connected to a drive shaft of the motor via clutches. By controlling the clutches, the tyres of the right and left lines can be driven by the motor independently from each other.

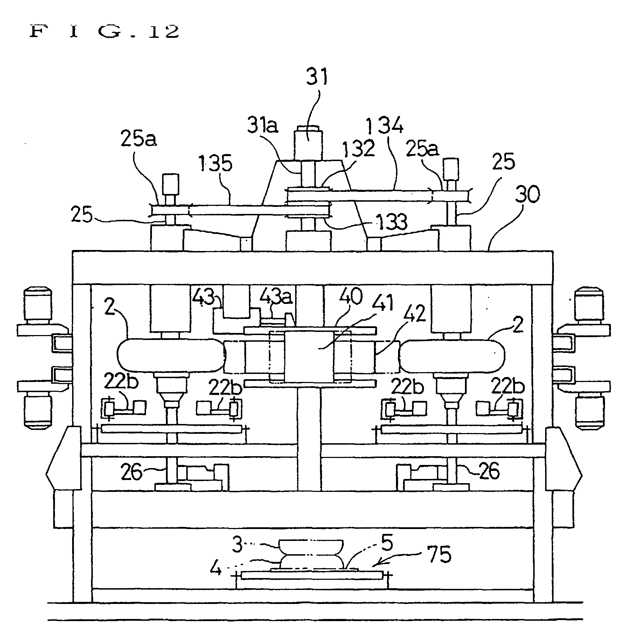

Fig. 12 shows an example of such an arrangement. A servomotor 31 is fixedly supported on a bracket projecting right and left from the middle of the supporting frame 30. On a drive shaft 31a projecting down from the servomotor 31 are attached upper and lower drive pulleys 132, 133, each via a clutch. A timing belt 134 is wound round the upper pulley 132 and a driven pulley 25a of the left side measurement block 22 (right side in Fig. 12) and another timing belt 135 is wound round the lower drive pulley 133 and a driven pulley 25a of the right side measurement block 22.

Therefore, the right and left upper rim shafts 25 can be rotated by the servomotor 31 through the timing belts 134, 135 respectively. It is possible to drive only one timing belt so that the right or left upper rim shaft can be selectively rotated by engaging or disengaging the clutches.

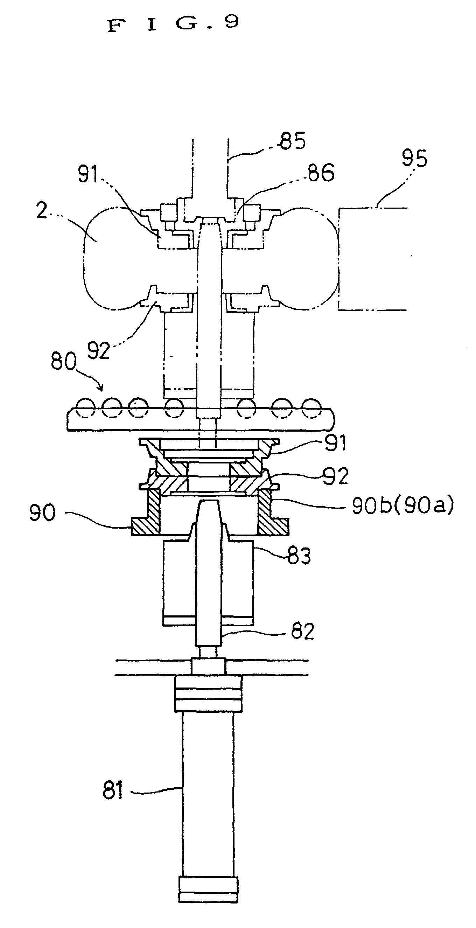

Figs. 9 to 11 show a more simplified modification of the rim exchange apparatus 60.

At the measurement block of a transfer conveyor 80, under a central opening formed by short rollers, is arranged a lower rim shaft 82 which is movable up and down by a rim elevator cylinder 81 and has a lower rim mount 83 at the upper end thereof. Above and opposite the lower rim shaft 82 is an upper rim shaft 85 which has an upper rim mount 86 with a magnet at the lower end thereof.

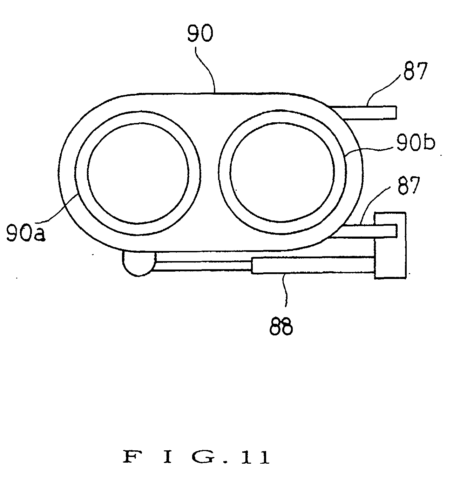

Along the lower surface of the transfer conveyor 80 is supported a rim shifting plate 90 which is movable back and forth guided by guide rails 87, as shown in Fig. 11. The rim shifting plate 90 is driven back and forth by a cylinder 88.

The rim shifting plate 90 is a plate member of an elliptical plan view having front 90a and rear 90b flat cylindrical sections projecting upwards to form circular openings. The front and rear cylindrical sections 90a, 90b support different kinds of upper and lower rims 91, 92 stacked together.

When the shifting plate 90 is positioned forwardly, the centre axis of the rear cylindrical section 90b is aligned with axes of the upper and lower rim shafts 82, 85. At the rearward position of the shifting plate 90, the centre axis of the front cylindrical section 90a is aligned with the axes of the upper and lower rim shafts 82, 85.

As shown in Fig. 9, under the transfer conveyor 80, upper and lower rims 91, 92 are supported on each of the front and rear cylindrical sections 90a, 90b. Which pair of rims 91, 92 is to be used can be selected by driving the rim shifting plate with the cylinder 88.

When a pair of rims 91, 92 is selected and the lower rim mount 83 is raised by driving the rim elevator cylinder 81, the lower rim mount 83 passes through the cylindrical section 90a or 90b to support the selected rims 91, 92 from the bottom and push them up together.

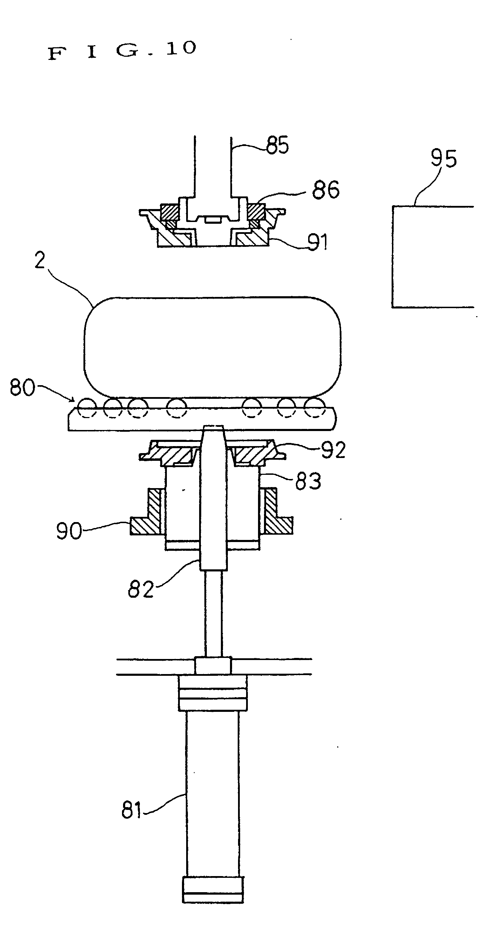

When the upper rim 91 comes into contact with the upper rim mount 86, a magnet is excited to attract the upper rim 91 to the upper rim mount 86. Then the lower rim mount 83 is lowered together with the lower rim 92 which separates from the upper rim 91. As a result, the upper and lower rims 91, 92 are positioned with the transfer conveyor 80 therebetween. A tyre 2 conveyed by the transfer conveyor 80 is then positioned between the upper and lower rims 91, 92 as shown in Fig. 10.

When the lower rim mount 83 rises from the position shown in Fig. 10, it raises the tyre 2 via the lower rim 92 so that the tyre 2 is pressed against the upper rim 91, which is attracted to the upper rim mount 86. Thus, the tyre 2 is supported at a predetermined height, pinched between the upper and lower rims 91, 92, as shown in Fig. 9 by the dot-dash line.

In this state, the tyre 2 is rotated by means of the upper rim shaft 85 and uniformity measurement is carried out by a rotary drum 95 pressed against the tyre and uniformity correction is carried out by the grinder.

When the measurement and correction is complete, the lower rim mount 83 is lowered, so that the tyre is placed on the transfer conveyor 80. The lower rim mount 83 separates from the tyre as it is lowered further. After that, the tyre 2 is conveyed downstream by the transfer conveyor 80.

For rim exchange, the lower rim 92 is raised by the lower rim mount 83 so that it contacts the upper rim 91. The magnet of the upper rim mount 86 is then demagnetized so that the upper rim 91 is supported by the lower rim 92 and is lowered together with the lower rim 92. After returning to the position shown in the solid lines of Fig. 9, the rim shifting plate 90 is moved in a forward or rear direction to exchange for another kind of rim.

If the rim shifting plate is made longer and the number of cylindrical sections is increased, three or more kinds of rims can be exchanged.

## Claims

1. Apparatus for measuring and correcting the uniformity of tyres, comprising:
a transfer conveyor (20) to transfer tyres (2), said transfer conveyor (20) being provided with a support means (30, 25, 26) for supporting and rotating a tyre conveyed to the support means by the transfer conveyor;
a rotary drum (42) for measuring the uniformity of a tyre supported by said support means (32), said drum being positioned to be pressed against and rotating with a tyre which is supported by the support means;
and grinder mechanisms (32), associated with said transfer conveyor (20), for grinding a tyre (2) supported by the support means to correct the uniformity of the tyre when correction uniformity is required;
**characterised in that** the apparatus comprises:
first and second such transfer conveyors (20, 20) for transferring tyres (2), arranged substantially parallel to one another and each having support means (30, 25, 26) for supporting and rotating a tyre (2) conveyed to the support means (30, 25, 26) by the respective transfer conveyor (20);
a single said rotary drum (42) disposed between said first and second parallel transfer conveyors (20, 20) to be pressed against and rotating with tyres (2) which are supported by respective support means (30, 25, 26) to measure the uniformity of the tyres (2), said rotary drum (42) being provided to move reciprocally at substantially regular intervals between said first and second parallel transfer conveyors (20, 20) while being pressed alternately against the tyres on the support means of the first and second transfer conveyors (20, 20) regardless of whether uniformity correction is required or not, to carry out uniformity measurements alternately on tyres (2) supported by the respective support means (30, 25, 26); and
first and second grinder mechanisms (32, 32) provided for grinding tyres (2) on respective support means (30, 25, 26) of the first and second transfer conveyors (20, 20)

2. Apparatus as claimed in claim 1, further comprising a control means for controlling uniformity measurement by the rotary drum (42) and uniformity correction by the grinder mechanisms (32), so that, as the uniformity correction of a tyre (2) supported by the support means (30, 25, 26) of one of the first and second transfer conveyors (20) is carried out, the uniformity measurement of a tyre supported by the support means (30, 25, 26) of the other of the first and second transfer conveyors (20) is carried out.

3. Apparatus as claimed in claim 1 or 2, wherein each of the support means comprises rim shafts (25, 26) which support the tyre (2) by means of upper and lower rims (3, 4).

4. Apparatus as claimed in claim 3, wherein the rim shafts (25, 26) of both of the support means are driven by a motor (31) via belt transmission means (134, 135) having clutch mechanisms.

5. Apparatus as claimed in any preceding claim, further comprising:
discrimination means (11) for discriminating between tyres fed into the apparatus; and
distribution means (12) for distributing tyres discriminated by the discrimination means to the first transfer conveyor (20), the second transfer conveyor (20) or another place (13).

6. Apparatus as claimed in any preceding claim, wherein the rotary drum (42) is rotatably supported, via a load cell (45), within a frame body (41) which has upper, lower, front and rear walls and openings on the right and left sides, the rotary drum (42) partially protruding from the openings of the right and left sides of the frame body (41).

7. Apparatus as claimed in claim 2 or any one of claims 3 to 6 when appended to claim 2, further comprising a rim exchange apparatus (60), which comprises:
a rim storage shelf (61) arranged upstream of and alongside a transfer conveyor (20), the rim storage shelf (61) being movable up and down and having shelves for storing respective pairs of upper and lower rims (3, 4);
upstream shifting means (70) for shifting a pair of upper and lower rims (3, 4) from the rim storage shelf (61) to the transfer conveyor (20);
a table lifter (74) arranged downstream of and alongside the transfer conveyor (20);
downstream shifting means (76) for shifting a pair of upper and lower rims (3, 4)from the transfer conveyor (20) to the table lifter (74); and
a rim transport means (75) for transporting rims (3, 4) between the table lifter (74) and the rim storage shelf (61).

8. Apparatus as claimed in claim 7, wherein the rim exchange apparatus (60) is arranged between, and is used by both of, the first and second transfer conveyors (20, 20).

9. Apparatus as claimed in any preceding claim, further comprising a tyre transport and classification apparatus, which comprises:
first and second forward transport conveyors (51, 51), arranged downstream of, and as extensions of, the first and second transfer conveyors (20, 20), for transporting tyres (2) downstream after uniformity measurement;
at least one intermediate forward transport conveyor (52), arranged between the first and second forward transport conveyors (51, 51), for transporting tyres (2) downstream; and
a first sideways transport conveyor (53), arranged substantially at right angles to the forward transport conveyors (51, 51), for transporting tyres (2) in a direction substantially at right angles to the downstream direction.

10. Apparatus as claimed in claim 9, wherein the forward transport conveyors are roller conveyors (51, 51), and the first sideways transport conveyor is a rope conveyor (53) having ropes which extend between, and are movable above and below, the rollers of the roller conveyors (51, 51).

11. Apparatus as claimed in claim 10, wherein the tyre transport and classification apparatus further comprises forward and rearward distribution means (50) arranged at each end of the first sideways transport conveyor (53) for distributing tyres (2) selectively in the downstream or upstream direction.

12. Apparatus as claimed in claim 11, wherein each forward and rearward distribution means (50) has a slanting member (55) arranged under the end of the first sideways transport conveyor (53) which is capable of slanting forward and rearward to roll tyres in the downstream or upstream direction.

13. Apparatus as claimed in claim 11 or claim 12, wherein the tyre transport and classification apparatus further comprises a second sideways transport conveyor (195) for transporting tyres (2) selectively in the downstream or upstream directions, the second sideways transport conveyor (195) being provided on at least one of downstream and upstream ends of the forward and rearward distribution means (50).

14. Apparatus as claimed in claim 13, wherein the second sideways transport conveyor (195) is arranged such that, as a tyre (2) is dropped thereon in an upright posture, the conveyor (195) is temporarily driven in a predetermined direction so that the tyre drops onto a chosen side thereof.

15. A method of measuring and correcting the uniformity of tyres, wherein a transfer conveyor (20) conveys a tyre (2) onto support means (30, 25, 26) for supporting and rotating the tyre (2); a rotary drum (42) is then pressed against and rotates with the tyre (2) which is supported by the support means (30, 25, 26) to measure the uniformity of the tyre (2); and a grinder mechanism (32) associated with the transfer conveyor (20) grinds the tyre (2) while the tyre (2) is being supported by the support means (30, 25, 26) to correct the uniformity of the tyre (2) when correction of the uniformity is required;
**characterised in that** the method comprises first and second transfer conveyors (20, 20) being used for transferring tires (2); said first and second transfer conveyors (20, 20) being arranged substantially parallel to one another and each having support means (30, 25, 26) for supporting and rotating a tyre (2) conveyed to the support means (30, 25, 26) by the respective transfer conveyor (20);
a single rotary drum (42) disposed between said first and second parallel transfer conveyors (20, 20) being pressed against and rotates with tyres (2) which are supported by respective support means (30, 25, 26), to measure the uniformity of the tyres (2);
said rotary drum (42) being moved reciprocally at substantially regular intervals between said first and second parallel transfer conveyors (20, 20) to be pressed alternately against the tyres (2) on the support means (30, 25, 26) of the first and second transfer conveyors (20, 20) regardless of whether uniformity correction is required or not to carry out uniformity measurements alternately on tyres (2) supported by the respective support means (30, 25, 26); and
one of the first and second grinder mechanisms (32, 32) grinds a tyre (2) on one of the support means (30, 25, 26) of the first and second transfer conveyors (20, 20), when uniformity correction is required, while said rotary drum (42) is pressed against and rotating with a tyre (2) on the other support means (30, 25, 26) for measuring the uniformity of the tyre (2) on the other support means (30, 25, 26).

## Patentansprüche

1. Vorrichtung zur Messung und Korrektur der Reifenuniformität, aufweisend:
ein Beförderungsmittel (20) zum Befördern von Rädern (2), wobei das Beförderungsmittel (20) mit Stützmitteln (30, 25, 26) versehen ist, um ein durch das Beförderungsmittel an das Stützmittel befördertes Rad zu tragen und zu drehen;
eine Drehtrommel (42) zum Messen der Uniformität eines Rades, das vom Stützmittel (30, 25, 26) getragen wird, wobei die Trommel so positioniert ist, dass sie gegen ein vom Stützmittel getragenes Rad gedrückt und mit diesem gedreht wird;
einen Schleifmechanismus (32), der dem Beförderungsmittel (20) zugeordnet ist, um ein vom Stützmittel getragenes Rad (2) zu schleifen, um die Uniformität des Rades zu korrigieren, wenn dies erforderlich ist;
**dadurch gekennzeichnet, dass** die Vorrichtung folgendes umfasst:
erste und zweite solcher Beförderungsmittel (20, 20) zum Befördern von Rädern (2), die im Wesentlichen parallel zueinander angeordnet sind und jeweils Stützmittel (30, 25, 26) aufweisen zum Tragen und Drehen eines Rades (2), welches durch das jeweilige Beförderungsmittel (20) zum Stützmittel (30, 25, 26) befördert wird;
eine einzelne Drehtrommel (42), die zwischen den parallenen ersten und zweiten Beförderungsmitteln (20, 20) angeordnet ist, um gegen Räder (2) gedrückt und mit diesen gedreht zu werden, welche durch jeweilige Stützmittel (30, 25, 26) getragen werden, um die Uniformität der Räder (2) zu messen, wobei die Drehtrommel (42) dafür vorgesehen ist, sich in im Wesentlichen regelmäßigen Intervallen wechselseitig zwischen den parallelen ersten und zweiten Beförderungsmitteln (20, 20) zu bewegen, während sie wechselweise gegen die Räder auf dem Stützmittel der ersten und zweiten Beförderungsmittel (20, 20) gedrückt wird, und zwar unabhängig davon, ob eine Korrektur der Uniformität erforderlich ist, um wechselweise Uniformitätsmessungen an Rädern (2) auszuführen, die von den jeweiligen Stützmitteln (30, 25, 26) getragen werden; und
erste und zweite Schleifmechanismen (32, 32), welche für das Schleifen von Rädern (2) auf jeweiligen Stützmitteln (30, 25, 26) der ersten und zweiten Beförderungsmittel (20, 20) vorhanden sind.

2. Vorrichtung nach Anspruch 1, **dadurch gekennzeichnet, dass** sie ein Steuerungsmittel zum Steuern der Uniformitätsmessung durch die Drehtrommel (42) und der Uniformitätskorrektur durch den Schleifmechanismus (32) aufweist, so dass, wenn die Uniformitätskorrektur eines Rades (2) ausgeführt wird, das vom Stützmittel (30, 25, 26) eines der ersten und zweiten Beförderungsmittel (20) getragen wird, die Uniformitätsmessung eines Rades ausgeführt wird, das vom Stützmittel (30, 25, 26) des anderen der ersten und zweiten Beförderungsmittel (20) getragen wird.

3. Vorrichtung nach Anspruch 1 oder 2, **dadurch gekennzeichnet, dass** jedes der Stützmittel Radkranzschäfte (25, 26) aufweist, die das Rad (2) mittels oberer und unterer Radkränze (2, 4) tragen.

4. Vorrichtung nach Anspruch 3, **dadurch gekennzeichnet, dass** die Radkranzschäfte (25, 26) beider Stützmittel durch einen Motor (31) über ein Bandtransportmittel (134, 135) mit Kupplungsmechanismen angetrieben werden.

5. Vorrichtung nach einem der vorstehenden Ansprüche, **dadurch gekennzeichnet, dass** sie folgendes aufweist:
Unterscheidungsmittel (11) zum Unterscheiden zwischen in die Vorrichtung eingebrachten Rädern; und
Verteilermittel (12) zum Verteilen der durch die Unterscheidungsmittel unterschiedenen Räder auf das erste Beförderungsmittel (20), das zweite Beförderungsmittel (20) oder eine andere Stelle (13).

6. Vorrichtung nach einem der vorstehenden Ansprüche, **dadurch gekennzeichnet, dass** die Drehtrommel (42) drehbar über einen Kraftaufnehmer (45) innerhalb eines Rahmenkörpers (41) gelagert ist, welcher obere, untere, vordere und rückwärtige Wände und Öffnungen auf der rechten und linken Seite aufweist, wobei die Drehtrommel (42) teilweise aus den Öffnungen der rechten und linken Seite des Rahmenkörpers (41) vorsteht.

7. Vorrichtung nach Anspruch 2 oder einem der Ansprüche 3 bis 6, falls auf Anspruch 2 rückbezogen, **dadurch gekennzeichnet, dass** sie eine Radkranz-Wechselvorrichtung (60) aufweist, welche folgendes aufweist:
ein Radkranz-Lagerfach (61), das stromaufwärts eines Transportmittels (20) und neben diesem angeordnet ist, wobei das Radkranz-Lagerfach (61) nach oben und unten bewegbar ist und Fächer zum Lagern jeweiliger Paare oberer und unterer Radkränze (3, 4) aufweist;
stromaufwärts gelegene Verschiebungsmittel (70) zum Verschieden eines Paares oberer und unterer Radkränze (3, 4) vom Radkranz-Lagerfach (61) zum Transportmittel (20);
einen Hubtisch (74), der stromabwärts des Beförderungsmittels (20) und neben diesem angeordnet ist;
stromabwärts gelegene Verschiebungsmittel (76) zum Verschieben eines Paares oberer und unterer Radkränze (3, 4) vom Beförderungsmittel (20) zum Hubtisch (74) ; und
ein Radkranz-Transportmittel (75) zum Transportieren von Radkränzen (3, 4) zwischen dem Hubtisch (74) und dem Radkranz-Lagerfach (61).

8. Vorrichtung nach Anspruch 7, **dadurch gekennzeichnet, dass** die Radkranz-Wechselvorrichtung (60) zwischen dem ersten und zweiten Beförderungsmittel (20, 20) angeordnet ist und von beiden benutzt wird.

9. Vorrichtung nach einem der vorstehenden Ansprüche, **dadurch gekennzeichnet, dass** sie eine Radtransport- und Klassifizierungsvorrichtung aufweist, welchefolgendes umfasst:
erste und zweite Vorwärtstransportmittel (51, 51), die stromabwärts der ersten und zweiten Beförderungsmittel (20, 20) und als Fortsetzungen derselben angeordnet sind, um Räder (2) nach der Uniformitätsmessung stromabwärts zu transportieren;
mindestens ein mittleres Vorwärtstransportmittel (52), das zwischen dem ersten und zweiten Vorwärtstransportmittel (51, 51) angeordent ist, um Räder (2) stromabwärts zu transportieren; und
ein erstes Seitwärtstransportmittel (53) das im Wesentlichen rechtwinklig zu den Vorwärtstransportmitteln (51, 51) angeordnet ist, um Räder (2) in eine Richtung im Wesentlichen rechtwinklig zur Stromabwärtsrichtung zu transportieren.

10. Vorrichtung nach Anspruch 9, **dadurch gekennzeichnet, dass** die Vorwärtstransportmittel Walzentransportmittel (51, 51) sind und das erste Seitwärtstransportmittel ein Seil-Transportmittel (53) mit Seilen ist, welche sich zwischen den Walzen der Walzentransportmittel (51, 51) erstrecken und über und unter diesen beweglich sind.

11. Vorrichtung nach Anspruch 10, **dadurch gekennzeichnet, dass** die Radtransport- und Klassifizierungsvorrichtung des Weiteren Vorwärts- und Rückwärtsverteilermittel (50) umfasst, die an jedem Ende des ersten Seitwärts-Transpormittels (53) angeordnet sind, um Räder (2) selektiv stromabwärts oder stromaufwärts zu verteilen.

12. Vorrichtung nach Anspruch 11, **dadurch gekennzeichnet, dass** jedes Vorwärts- und Rückwärtsverteilermittel (50) ein Neigungselement (55) aufweist, das unter dem Ende des ersten Seitwärts-Transportmittels (53) angeordnet ist und sich nach vorne und hinten neigen kann, um Räder stromabwärts.oder stromaufwärts zu rollen.

13. Vorrichtung nach Anspruch 11 oder 12, **dadurch gekennzeichnet, dass** die Radtransport- und Klassifizierungsvorrichtung des Weiteren ein zweites Seitwärts-Transportmittel (195) aufweist, um Räder (2) selektiv stromabwärts oder stromaufwärts zu transportieren, wobei das zweite Seitwärts-Transportmittel (195) auf mindestens einem der stromabwärts und stromaufwärts gelegenen Enden des Vorwärts- und Rückwärtsverteilermittels (50) vorhanden ist.

14. Vorrichtung nach Anspruch 13, **dadurch gekennzeichnet, dass** das zweite Seitwärts-Transportmittel (195) so angeordnet ist, dass, wenn ein Rad (2) in aufrechter Stellung darauf fällt, das Transportmittel (195) zeitweise in eine vorgegebene Richtung angetrieben wird, so dass das Rad auf eine ausgewählte Seite desselben fällt.

15. Verfahren zur Messung und Korrektur der Uniformität von Rädern, wobei ein Transportmittel (20) ein Rad (2) auf ein Stützmittel (30, 25, 26) zum Stützen und Drehen des Rades (2) befördert; dann eine Drehtrommel (42) gegen das Rad (2), das vom Stützmittel (30, 25, 26) getragen wird, gedrückt wird und sich mit diesem dreht, um die Uniformität des Rades (2) zu messen; und ein dem Transportmittel (20) zugeordneter Schleifmechanismus (32) das Rad (2) schleift, während das Rad (2) auf dem Stützmittel (30, 25, 26) getragen wird, um die Uniformität des Rades (2) zu korrigieren, falls dies erforderlich ist;
**dadurch gekennzeichnet, dass** das Verfahren umfasst: erste und zweite Beförderungsmittel (20, 20), die für das Befördern von Rädern (2) verwendet werden; wobei das erste und zweite Beförderungsmittel im Wesentlichen parallel zueinander angeordnet sind und jeweils Stützmittel (30, 25, 26) zum Tragen und Drehen eines Rades (2), das durch das jeweilige Beförderungsmittel (20) zum Stützmittel (30, 25, 26) befördert wird, aufweisen;
eine einzenele Drehtrommel (42), die zwischen den parallelen ersten und zweiten Beförderungsmitteln (20, 20) angeordnet ist, gegen Räder (2), die durch jeweilige Stützmittel (30, 25, 26) getragen werden, gedrückt wird und sich mit diesem dreht, um die Uniformität der Räder (2) zu messen;
wobei die Drehtrommel (42) im Wesentlichen in regelmäßigen Intervallen wechselseitig zwischen den parallelen ersten und zweiten Beförderungsmittelen (20, 20) bewegt wird, um wechselweise gegen die Räder (2) auf den Stützmitteln (30, 25, 26) der ersten und zweiten Transportmittel (20, 20) gedrückt zu werden, und zwar unabhängig davon, ob eine Uniformitätskorrektur erforderlich ist oder nicht, um Uniformitätsmessungen wechselweise auf Rädern (2) auszuführen, die von den jeweiligen Stützmitteln (30, 25, 26) getragen werden; und
einer der ersten und zweiten Schleifmechanismen (32, 32) ein Rad (2) auf einem der Stützmittel (30, 25, 26) der ersten und zweiten Beförderungsmittel (20, 20) schleift, wenn eine Uniformitätskorrektur erforderlich ist, während die Drehtrommel (42) gegen ein Rad (2) auf dem anderen Stützmittel (30, 25 26) gedrückt wird und sich mit diesem dreht, um die Uniformität des Rades (2) auf dem anderen Stützmittel (30, 25, 26) zu messen.

## Revendications

1. Appareil pour mesurer et corriger l'uniformité de pneumatiques, comprenant :
un convoyeur de transfert (20) destiné à transférer des pneumatiques (2), ledit convoyeur de transfert (20) étant doté d'un moyen de support (30, 25, 26) destiné à supporter et faire tourner un pneumatique convoyé vers le moyen de support par le convoyeur de transfert :
un tambour rotatif (42) pour mesurer l'uniformité d'un pneumatique supporté par ledit moyen de support (30, 25, 26), ledit tambour étant positionné de façon à être pressé contre un pneumatique et à tourner avec lui, lequel pneumatique est supporté par le moyen de support ;
et des mécanismes rectificateurs (32), associés audit convoyeur de transfert (20), pour rectifier un pneumatique (2) supporté par le moyen de support afin de corriger l'uniformité du pneumatique lorsqu'une correction de l'uniformité est exigée ;
**caractérisé en ce que** l'appareil comprend :
des premier et deuxième convoyeurs de transfert (20, 20) pour transférer des pneumatiques (2), disposés sensiblement parallèlement l'un à l'autre et comportant chacun un moyen de support (30, 25, 26) pour supporter et faire tourner un pneumatique (2) convoyé vers le moyen de support (30, 25, 26) par le convoyeur de transfert respectif (20) ;
un tambour rotatif unique (42) disposé entre lesdits premier et deuxième convoyeurs de transfert parallèles (20, 20) afin d'être pressé contre des pneumatiques (2) et pour tourner avec ceux-ci, lesquels pneumatiques sont supportés par des moyens de support respectifs (30, 25, 26) afin de mesurer l'uniformité des pneumatiques (2), ledit tambour rotatif (42) étant prévu pour effectuer un mouvement de va-et-vient à des intervalles sensiblement réguliers entre lesdits premier et deuxième convoyeurs de transfert parallèles (20, 20) tout en étant pressé alternativement contre les pneumatiques sur les moyens de support des premier et deuxième convoyeurs de transfert (20, 20), que la correction de l'uniformité soit requise ou non, afin d'effectuer des mesures d'uniformité alternativement sur des pneumatiques (2) supportés par les moyens de support respectifs (30, 25, 26) ; et
des premier et deuxième mécanismes rectificateurs (32, 32) prévus pour rectifier des pneumatiques (2) sur des moyens de support respectifs (30, 25, 26) des premier et deuxième convoyeurs de transfert (20, 20).

2. Appareil selon la revendication 1, comprenant en outre un moyen de commande pour commander la mesure de l'uniformité par le tambour rotatif (42) et la correction de l'uniformité par les mécanismes rectificateurs (32), de sorte que, lorsque la correction de l'uniformité d'un pneumatique (2) supporté par le moyens de support (30, 25, 26) de l'un desdits premier et deuxième convoyeurs de transfert (20) est effectuée, la mesure de l'uniformité d'un pneumatique supporté par le moyen de support (30, 25, 26) de l'autre des premier et deuxième convoyeurs de transfert (20) est effectuée.

3. Appareil selon la revendication 1 ou 2, dans lequel chacun des moyens de support comprend des arbres de jante (25, 26) qui supportent le pneumatique (2) au moyen de jantes supérieure et inférieure (3, 4).

4. Appareil selon la revendication 3, dans lequel les arbres de jante (25, 26) des deux moyens de support sont entraînés par un moteur (31) via des moyens de transmission par courroie (134, 135) comportant des mécanismes d'embrayage.

5. Appareil selon l'une quelconque des revendications précédentes, comprenant en outre :
des moyens de discrimination (11) pour effectuer une discrimination entre des pneumatiques fournis à l'appareil ; et
des moyens de distribution (12) pour distribuer des pneumatiques, discriminés par les moyens de discrimination, au premier convoyeur de transfert (20), au deuxième convoyeur de transfert (20) ou à un autre endroit (13).

6. Appareil selon l'une quelconque des revendications précédentes, dans lequel le tambour rotatif (42) est supporté à rotation, via une boîte dynamométrique (45), à l'intérieur d'un corps de châssis (41) qui comporte des parois supérieure, inférieure, avant et arrière et des ouvertures ménagées sur les côtés droit et gauche, le tambour rotatif (42) saillant partiellement des ouvertures des côtés droit et gauche du corps de châssis (41).

7. Appareil selon la revendication 2 ou l'une quelconque des revendications 3 à 6, lorsqu'elles sont jointes à la revendication 2, comprenant en outre un appareil de remplacement de jantes (60), qui comprend :
un rayonnage de stockage de jantes (61) disposé en amont et le long d'un convoyeur de transfert (20), le rayonnage de stockage de jantes (61) étant mobile vers le haut et vers le bas et comportant des rayons pour stocker des paires respectives de jantes supérieure et inférieure (3, 4) ;
des moyens de décalage en amont (70) pour décaler la paire de jantes supérieure et inférieure (3, 4) du rayonnage de stockage de jantes (61) au convoyeur de transfert (20) ;
un dispositif de levage de table (74) disposé en aval et le long du convoyeur de transfert (20) ;
des moyens de décalage en aval (76) pour décaler une paire de jantes supérieure et inférieure (3, 4) du convoyeur de transfert (20) au dispositif de levage de table (114) ; et
un moyen de transport de jantes (75) pour transporter des jantes (3, 4) entre le dispositif de levage de table (74) et le rayonnage de stockage de jantes (61).

8. Appareil selon la revendication 7, dans lequel l'appareil de remplacement de jantes (60) est disposé entre les premier et deuxième convoyeurs de transfert (20, 20) qui utilisent tous les deux ledit appareil de remplacement de jantes.

9. Appareil selon l'une quelconque des revendications précédentes, comprenant en outre un appareil de transport et de classification de pneumatiques, qui comprend :
des premier et deuxième convoyeurs de transport en avant (51, 51), disposés en aval des premier et deuxième convoyeurs de transfert (20, 20) et constituant des extensions de ceux-ci, pour transporter des pneumatiques (2) en aval après mesure de l'uniformité ;
au moins un convoyeur intermédiaire de transport en avant (52), disposé entre les premier et deuxième convoyeurs de transport en avant (51, 51), pour transporter des pneumatiques (2) en aval ; et
un premier convoyeur de transport latéral (53), disposé sensiblement perpendiculairement au convoyeur de transport en avant (51, 51), pour transporter des pneumatiques (2) dans une direction sensiblement perpendiculaire à la direction en aval.

10. Appareil selon la revendication 9, dans lequel les convoyeurs de transport en avant sont des convoyeurs à rouleaux (51, 51), et le convoyeur de transport latéral est un convoyeur à câbles (53) comportant des câbles qui s'étendent entre les rouleaux des convoyeur à rouleaux (51, 51) et qui sont mobiles au-dessus et au-dessous desdits rouleaux.

11. Appareil selon la revendication 10, dans lequel l'appareil de transport et de classification de pneumatiques comprend en outre des moyens de distribution en avant et en arrière (50) disposés à chaque extrémité du premier convoyeur de transport latéral (53) pour distribuer des pneumatiques (2) sélectivement dans la direction en aval ou en amont.

12. Appareil selon la revendication 11, dans lequel chaque moyen de distribution en avant et en arrière (50) comporte un élément d'inclinaison (55) disposé sous l'extrémité du premier convoyeur de transport latéral (53) qui est apte à s'incliner en avant et un arrière pour faire rouler des pneumatiques dans la direction en aval ou en amont.

13. Appareil selon la revendication 11 ou la revendication 12, dans lequel l'appareil de transport et de classification de pneumatiques comprend en outre un deuxième convoyeur de transport latéral (195) pour transporter des pneumatiques (2) sélectivement dans les directions en aval ou en amont, le deuxième convoyeur de transport latéral (195) étant prévu sur au moins l'une des extrémités aval et amont du moyen de distribution en avant et en arrière (50).

14. Appareil selon la revendication 13, dans lequel le deuxième convoyeur de transport latéral (195) est disposé de telle sorte que, lorsqu'un pneumatique (2) est lâché sur celui-ci dans une position verticale, le convoyeur (195) est entraîné temporairement dans une direction prédéterminée de telle sorte que les pneumatiques tombent sur un côté choisi de celui-ci.

15. Procédé de mesure et de correction de l'uniformité de pneumatiques, dans lequel un convoyeur de transfert (20) amène un pneumatique (2) sur des moyens de support (30, 25, 26) pour supporter et faire tourner le pneumatique (2) ; un tambour rotatif (42) est alors pressé contre le pneumatique (2) et tourne avec lui, lequel pneumatique est supporté par les moyens de support (30, 25, 26) pour mesurer l'uniformité du pneumatique (2) ; et un mécanisme rectificateur (32) associé au convoyeur de transfert (20) rectifie le pneumatique (2) alors que le pneumatique (2) est supporté par le moyen de support (30, 25, 26) afin de corriger l'uniformité du pneumatique (2) lorsque la correction de l'uniformité est requise ;
**caractérisé en ce que** le procédé comprend
des premier et deuxième convoyeurs de transfert (20, 20) utilisés pour transférer des pneumatiques (2) ; lesdits premier et deuxième convoyeurs de transfert (20, 20) étant disposés sensiblement parallèlement l'un à l'autre et comportant chacun un moyen de support (30, 25, 26) pour supporter et faire tourner un pneumatique (2) convoyé vers le moyen de support (30, 25, 26) par le convoyeur de transfert respectif (20) ;
un tambour rotatif unique (42), disposé entre lesdits premier et deuxième convoyeurs de transfert parallèles (20, 20), qui est pressé contre des pneumatiques (2) et tourne avec ceux-ci, lesquels pneumatiques sont supportés par des moyens de support respectifs (30, 25, 26), afin de mesurer l'uniformité des pneumatiques (2) ;
ledit tambour rotatif (42) effectuant un mouvement de va-et-vient à des intervalles sensiblement réguliers entre lesdits premier et deuxième convoyeurs de transfert parallèles (20, 20) pour être pressé alternativement contre les pneumatiques (2) sur les moyens de support (30, 25, 26) des premier et deuxième convoyeurs de transfert (20, 20), que la correction de l'uniformité soit requise ou non, afin d'effectuer des mesures de l'uniformité alternativement sur des pneumatiques (2) supportés par les moyens de support respectifs (30, 25, 26) ; et
l'un des premier et deuxième mécanismes rectificateurs (30, 32) rectifie un pneumatique (2) sur l'un des moyens de support (30, 25, 26) des premier et deuxième convoyeurs de transfert (20, 20), lorsque la correction de l'uniformité est requise, tandis que ledit tambour rotatif (42) est pressé contre un pneumatique (2) et tourne avec celui-ci, lequel pneumatique est supporté par l'autre moyen de support (30, 25, 26) pour mesurer l'uniformité du pneumatique (2) sur l'autre moyen de support (30, 25, 26).
